# EUROPEAN PATENT APPLICATION

(11) **EP 3 021 299 A1**
(43) Date of publication of application: **18.05.2016**
(21) Application number: 15195034.2
(22) Date of filing: 17.11.2015
(51) Int. Cl.: G07G 1/00, G06Q 20/20

(54) **INFORMATION PROCESSING APPARATUS, STORE SYSTEM AND METHOD**

(30) Priority: 17.11.2014 JP 2014233036
(71) Applicant: Toshiba TEC Kabushiki Kaisha, Tokyo 141-0032 (JP)
(72) Inventor: IIZAKA, Hitoshi, Shinagawa-ku, Tokyo 141-0032 (JP)
(74) Representative: Takeuchi, Maya

(57) **Abstract**

An information processing apparatus comprises an image capturing module configured to photograph an object held over an image capturing section; a first recognition module configured to compare a feature amount of the object photographed by the image capturing module with a feature amount for collation of each of commodities pre-stored in a dictionary to obtain a similarity degree therebetween and recognize, from different commodities, a commodity matching with the object through the similarity degree; a display control module configured to display, on a first screen, a first input section corresponding to the commodity recognized by the first recognition module and a second input section corresponding to commodities in advance; an input module configured to receive the selection on the first or second input section displayed by the display control module; and a registration module configured to sales-register the commodity corresponding to the first or second input section received by the input module.

## Description

### FIELD

Embodiments described herein relate to an information processing apparatus, a store system and a method.

### BACKGROUND

Conventionally, in a store such as a supermarket, a system is used which photographs a commodity attached with a code symbol such as a barcode and uses code information extracted from the code symbol contained in image data to sales-register the commodity. Moreover, the system, in a case of sales-registering a commodity attached with no barcode, sales-registers the commodity selected using a preset screen on which buttons corresponding to the commodity in advance are displayed for the operator to select the commodity.

In recent years, there is a technology relating to a general object recognition (object recognition) in which a feature amount of a target object extracted from image data obtained by capturing an image of the object is compared with data (feature amounts) for collation that is pre-registered in a dictionary to obtain a similarity degree therebetween to recognize (detect) the category of the object according to the similarity degreea. Moreover, a system is proposed which applies the technology relating to the general object recognition to recognizing a commodity such as fresh vegetable and fruit to sales-register the commodity. Further, a system is proposed which has two functions within a sales registration function based on the foregoing code symbol, a sales registration function based on the preset screen and a sales registration function based on the object recognition.

Further, there is a case where a picture of the vegetable and fruit is printed on the package of a commodity attached with a code symbol. There is a possibility that the system which sales-registers the commodity based on the object recognition may mistakenly take the vegetable and fruit on the package picture as the commodity and sale-register the vegetable and fruit (mistaken commodity). Thus, in order to prevent the execution of sales registration for the mistaken commodity, the operator must switch the setting to the sales registration based on the code symbol from the sales registration based on the object recognition for the commodity . Moreover, the operator must switch the current screen to the preset screen if the operator sales-registers the commodity corresponding to a button selected by the preset screen. However, this complicated operation reduces the processing efficiency of the system.

### DESCRIPTION OF THE DRAWINGS

Fig. 1 is a perspective view exemplifying a checkout system according to an embodiment;
Fig. 2 is a block diagram illustrating the hardware structures of a POS terminal and a commodity reading apparatus;
Fig. 3 is a concept diagram illustrating the data structure of a PLU file;
Fig. 4 is a block diagram illustrating the functional structure of the POS terminal;
Fig. 5 is an illustration diagram exemplifying a preset screen;
Fig. 6 is an illustration diagram exemplifying the preset screen not including a frame image display area;
Fig. 7 is an illustration diagram exemplifying the preset screen on which a commodity candidate button is displayed in the same form with a preset button;
Fig. 8 is a flowchart illustrating the flow of an image capturing processing;
Fig. 9 is a flowchart illustrating the flow of a commodity recognition processing based on a code symbol recognition engine;
Fig. 10 is a flowchart illustrating the flow of a commodity recognition processing based on an object recognition engine;
Fig. 11 is a flowchart illustrating the flow of a sales registration processing;
Fig. 12 is an external perspective view illustrating the structure of a self-checkout POS terminal; and
Fig. 13 is a block diagram illustrating the hardware structure of the self-checkout POS terminal.

### DETAILED DESCRIPTION

In accordance with embodiments of the present invention, an information processing apparatus comprises an image capturing module, a first recognition module, a display control module, an input module and a registration module. The image capturing module photographs an object held over an image capturing section. The first recognition module compares a feature amount of the object photographed by the image capturing module with a feature amount for collation of each commodity that is pre-registered in a dictionary to obtain a similarity degree therebetween to recognize a commodity corresponding to the object from the each commodity according to the similarity degree. The display control module displays, on a first screen, a first input section that corresponds to the commodity recognized by the first recognition module and a second input section which corresponds to commodities in advance. The input module receives an operation of selecting the first or second input section displayed by the display control module. The registration module sales-registers a commodity corresponding to the first or second input section received by the input module.

Preferably, the information processing further comprises: a second recognition module configured to detect a code symbol attached to the object from the image of the object captured by the image capturing module and recognize a commodity corresponding to the object according to the code symbol wherein the registration module sale-registers the commodity recognized by the second recognition module.

Preferably, the display control module still displays the first input section even if the displayed first screen is switched according to each commodity category of the commodities corresponding to the second input section.

Preferably, the display control module still displays the first input section even if the displayed first screen is switched according to each commodity category of the commodities corresponding to the second input section.

Preferably, in the case where it is set that a commodity the similarity degree of which is above a threshold value is sales-registered even if there is no input from the input module, the registration module sales-registers the commodity which is recognized by the first recognition module to have the similarity degree higher than the threshold value.

The present invention also relates to a store system, comprising the information processing apparatus.

The present invention further relates to a method for processing information using an information processing apparatus, including: capturing image by photographing an object; a first recognition step comprising comparing a feature amount of the object photographed at the capturing step with a feature amount for collation of each of commodities that is pre-stored in a dictionary to obtain a similarity degree therebetween and recognizing, from different commodities, a commodity matching with the object according to the similarity degree; displaying, on a first screen, a first input section that corresponds to the commodity recognized at the first recognition step and a second input section which corresponds to commodities in advance; an inputting step comprising receiving the selection on the first or second input section displayed at the displaying step; and sales-registering the commodity corresponding to the first or second input section received at the input step.

Preferably, the method further comprises: a second recognition step to detect a code symbol attached to the object from the image of the object captured by the image capturing module and recognize a commodity corresponding to the object according to the code symbol, wherein the commodity recognized at the second recognition step is sale-registered.

Preferably, the first input section is still displayed even if the displayed first screen is switched according to each commodity category of the commodities corresponding to the second input section.

Preferably, in the case where it is set that a commodity the similarity degree of which is above a threshold value is sales-registered even if there is no input from at the inputting step, the commodity which is recognized to have the similarity degree higher than the threshold value at the first recognition step is sales-registered.

The present invention also relates to a computer-readable storage medium having stored thereon a program which is executable by a computer, the program controlling the computer to execute functions of the information processing apparatus according.

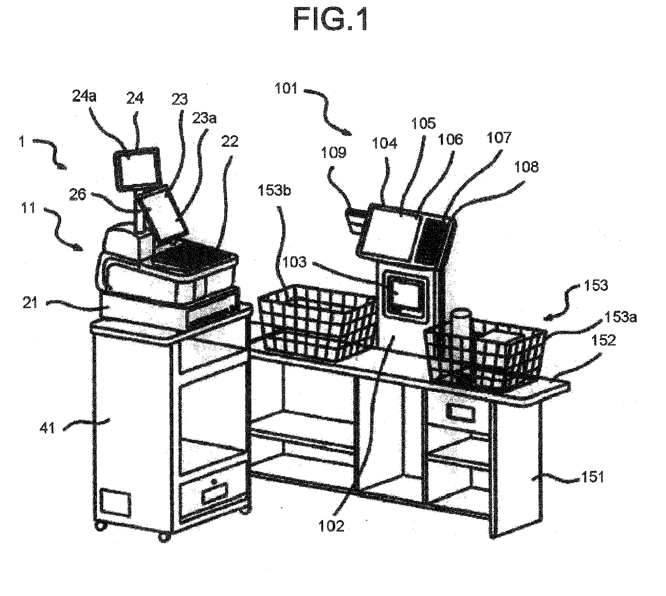

By taking a checkout system as an example, the information processing apparatus, the store system and the method according to the present embodiment are described below, as a non-limiting example, with reference to accompanying drawings. The store system is a checkout system (POS system) provided with a POS terminal for the sales registration and settlement of the commodities relating to a transaction. The present embodiment is an application example to the checkout system introduced to the store such as a supermarket.Fig. 1 is a perspective view exemplifying a checkout system 1 according to the embodiment. As shown in Fig. 1, the checkout system 1 comprises a commodity reading apparatus 101 for reading the information relating to a commodity and a POS terminal 11 for the sales registration and settlement of the commodity relating to a transaction. The use of the POS terminal 11 as the information processing apparatus according to the present embodiment is exemplified below.

The POS terminal 11 is placed on the upper surface of a drawer 21 configured on a checkout table 41. The POS terminal 11 controls the opening of the drawer 21. A keyboard 22 is arranged on the upper surface of the POS terminal 11. The keyboard 22 has keys for the input operation of the operator (shop clerk). A first display device 23 of the POS terminal 11 for displaying information to the operator is arranged behind the keyboard 22. The first display device 23 has a display surface 23a on which a touch panel 26 is laminated.

The POS terminal 11 comprises a second display device 24 which is arranged more behind the first display device 23 to display information to the customer. The display surface 24a of the second display device 24 shown in Fig. 1 faces the front side of Fig. 1. However, the second display device 24 can be rotated so that the display panel 24a is oriented towards a customer to show information to the customer.

A counter table 151 is a long desk-shaped table. The counter table 151 is arranged in an L shape adjacent to the checkout table 41 on which the POS terminal 11 is placed. A receiving surface 152 is formed on the counter table 151. A shopping basket 153 for accommodating commodities is placed on the receiving surface 152. The shopping basket 153 includes a first shopping basket 153a and a second shopping basket 153b. The first shopping basket 153a is a basket for the customer to put in commodities to be purchased. The second shopping basket 153b is a basket for accommodating commodities the commodity information of which is read by the commodity reading apparatus 101. The second shopping basket 153b is placed opposite to the first shopping basket 153a across the commodity reading apparatus 101. The shopping basket 153, which is not limited to be basket-shaped, may be a tray, a box, a bag or the like.

The commodity reading apparatus 101, which is placed on the receiving surface 152 of the counter table 151, can transmit or receive data to/from the POS terminal 11. The commodity reading apparatus 101 has a thin rectangular-shaped housing 102. A reading window 103 is arranged on the front side of the housing 102. A display and operation section 104 is arranged on the upper part of the housing 102.

The display and operation section 104 comprises a first display device 106 which is, for example, a liquid crystal display on the surface of which a touch panel 105 is laminated. The display and operation section 104 comprises a keyboard 107 which is arranged at the right of the first display device 106. The display and operation section 104 comprises a card reading slot 108 of a card reader which is located at the right of the keyboard 107. The display and operation section 104 comprises a second display device 109 which, standing opposite to the operator, is arranged at a left backside of the display and operation section 104. The second display device 109 is, for example, a liquid crystal display which provides information to the customer.

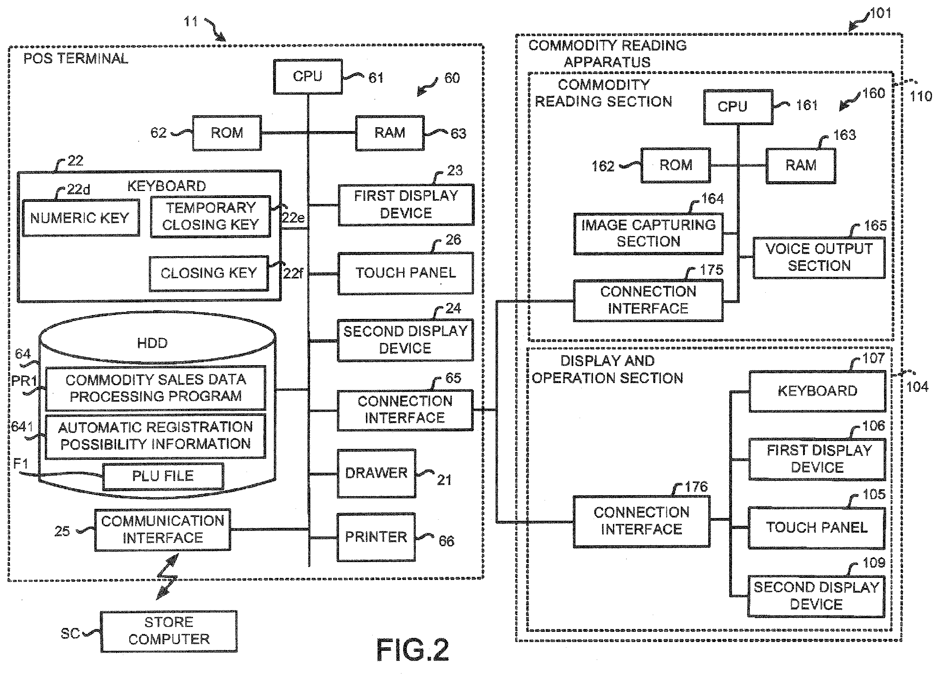

Such a commodity reading apparatus 101 comprises a commodity reading section 110 (refer to Fig. 2) which is provided with an image capturing section 164 (refer to Fig. 2) inside the reading window 103.

The operator who operates the commodity reading apparatus 101 moves the commodities in the first shopping basket 153a into the second shopping basket 153b one by one. When being moved, the operator holds the commodity over the reading window 103 of the commodity reading apparatus 101, and meanwhile, the image capturing section 164 (refer to Fig. 2) photographs the commodity.

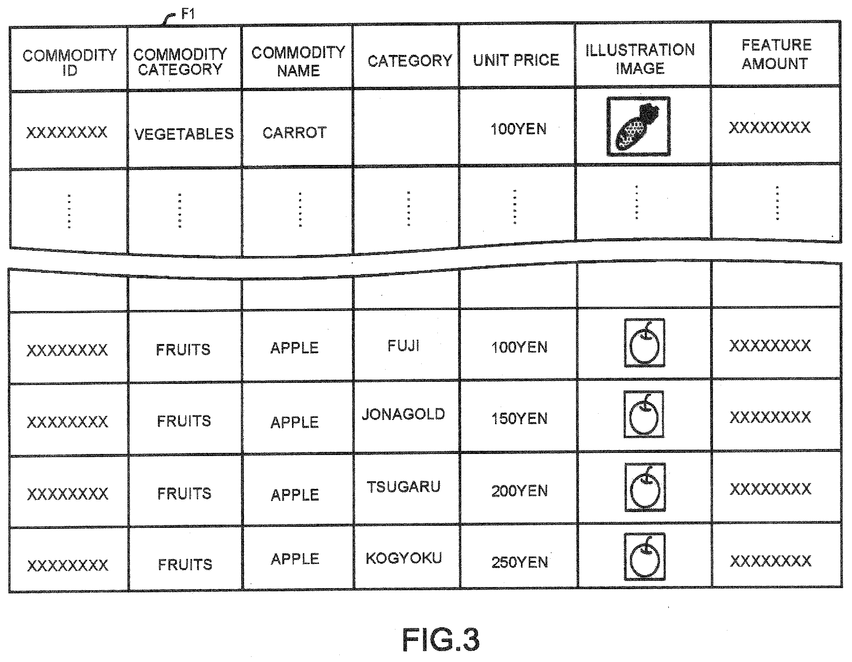

The commodity reading apparatus 101 informs the POS terminal 11 of the commodity ID of a commodity to be sales-registered. Specifically, the commodity reading apparatus 101 displays, on the display and operation section 104, a screen for specifying which one of the commodities stored in a PUL file F1 (refer to Fig. 3) described later is corresponding to the object commodity of sales registration. Moreover, the commodity reading apparatus 101 notifies the POS terminal 11 of the commodity ID of the specified commodity. In the POS terminal 11, the information relating to sales registration is recorded in a sales master file (not shown) according to the commodity ID notified from the commodity reading apparatus 101, and thereby executing the sales registration. The information relating to the sales registration refers to, for example, a commodity category, a commodity name and unit price of the commodity corresponding to the commodity ID.

Fig. 2 is a block diagram illustrating the hardware structures of the POS terminal 11 and the commodity reading apparatus 101. The POS terminal 11 comprises a micro computer 60 functioning as an information processing section for carrying out an information processing. The micro computer 60 comprises a CPU (Central Processing Unit) 61, a ROM (Read Only Memory) 62 and a RAM (Random Access Memory) 63. In the micro computer 60, the CPU 61 which carries out various operation processing and controls each section is connected with the ROM 62 and the RAM 63 via a bus line.

Via various input/output circuits (not shown), the CPU 61 of the POS terminal 11 is connected with the drawer 21, the keyboard 22, the first display device 23, the touch panel 26 and the second display device 24, which are controlled by the CPU 61.

The keyboard 22 includes a numeric key 22d such as numeric characters or operators a temporary closing key 22e and a closing key 22f.

The CPU 61 of the POS terminal 11 is connected with an HDD (Hard Disk Drive) 64 in which various programs and files are stored. When the POS terminal 11 is activated, the programs and various files stored in the HDD 64 are totally or partially copied into the RAM 63 to be executed by the CPU 61.

The HDD 64 stores a commodity sales data processing program PR1, automatic registration possibility information 641 and the PLU file F1. An example of the programs stored in the HDD 64 is the commodity sales data processing program PR1. Further, if the HDD 64 is a storage device, then the HDD 64 may be constituted by another storage medium such as a SDD (Solid State Drive).

The commodity sales data processing program PR1 has various functions relating to a commodity sales data processing.

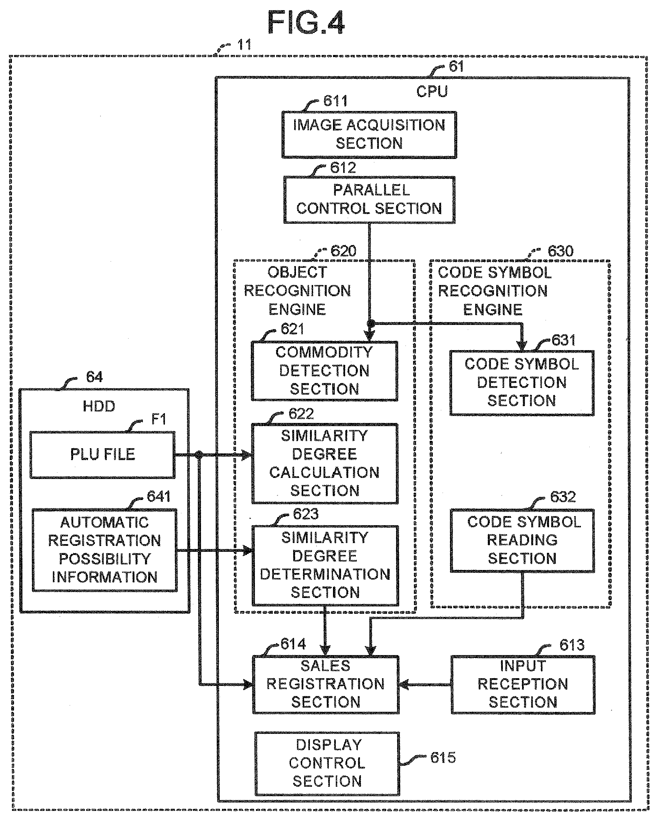

The automatic registration possibility information 641 is setting information indicating whether or not the automatic sales-registration a commodity meeting a specific condition which is recognized by an object recognition engine 620 (refer to Fig. 4) described later is permitted even if the sales registration of the commodity is not confirmed by the operator. In a case of permission of the setting, then the commodity meeting a specific condition is automatically sales-registered. On the other hand, in a case of prohibition of the setting, then the commodity meeting a specific condition is not sales-registered automatically.

The PLU file F1 is a commodity file which stores the information relating to the sales registration of each commodity displayed and sold in the store. The PLU file F1 is hereinafter used as a dictionary; however, the dictionary may be a file different from the PLU file F1. The dictionary stores the data for collation (a feature amount) for recognizing the commodity extracted from the image data obtained by capturing the image of the commodity for a plurality of commodities. In the case where the dictionary is the file different from the PLU file F1, the dictionary stores the data for collation (feature amounts) corresponding to the information (identification information) of the PLU file F1. The feature amount is obtained by parameterizing external characteristics, such as the standard shape, the external tint, the pattern and the concave-convex state, of the commodity.

Fig. 3 is a concept diagram exemplifying the data structure of the PLU file F1. As shown in Fig. 3, the PLU file F1 is a file which stores, for each commodity, a commodity ID, commodity-related information, an illustration image and a feature amount as the commodity information of the commodity. The commodity ID is identification information for identifying the commodity. The commodity-related information is information including the commodity category, the commodity name, the category and the unit price to which the commodity belongs. The illustration image is an image indicating the commodity. The feature amount is information indicating the tint or the surface concave-convex state of the commodity read from an image obtained by photographing the commodity. Moreover, the feature amount is data for collation used in the determination processing of similarity degree described later. Further, the commodity reading apparatus 101 can read the PUL file F1 via a connection interface 65 described later.

Returning to Fig. 2, the CPU 61 of the POS terminal 11 is connected with a communication interface 25 for executing data communication with a store computer SC via input/output circuits (not shown). The store computer SC is arranged in the back office of the store. The PLU file F1 to be transmitted to the POS terminal 11 is stored in the HDD (not shown) of the store computer SC.

The CPU 61 of the POS terminal 11 is further connected with the connection interface 65 which is capable of transmitting and receiving data to/from the commodity reading apparatus 101. The connection interface 65 is connected with the commodity reading apparatus 101. The CPU 61 of the POS terminal 11 is further connected with a printer 66 for printing a receipt. Under the control of the CPU 61, the printer 66 prints contents of a transaction on the receipt.

The commodity reading apparatus 101 comprises a micro computer 160. The micro computer 160 comprises a CPU 161, an ROM 162 and an RAM 163. In the micro computer 160, the CPU 161 is connected with the ROM 162 and the RAM 163 via a bus line. The programs executed by the CPU 161 are stored in the ROM 162. The image capturing section 164 and a voice output section 165 are connected with the CPU 161 via various input/output circuits (none is shown). The CPU 161 controls the operations of the image capturing section 164 and the voice output section 165.

The display and operation section 104 is connected with the commodity reading section 110 and the POS terminal 11 via a connection interface 176. The display and operation section 104 operates under the control of the CPU 161 of the commodity reading section 110 and the CPU 61 of the POS terminal 11.

The image capturing section 164 is equipped with an image sensor (not shown) such as a color CCD image sensor or a color CMOS image sensor and a light source (not shown) such as an LED. The image capturing section 164 photographs an object such as a commodity from the inside of the reading window 103 under the control of the CPU 161. The image capturing section 164 captures images of the commodity at a frame rate of, for example, 30fps (Frame Per Second). The frame images sequentially captured by the image capturing section 164 at a given frame rate are stored in the RAM 163.

The voice output section 165 is a voice circuit or a loudspeaker for generating a preset warning voice. The voice output section 165 outputs a warning voice or sound to carry out notification under the control of the CPU 161.

The CPU 161 is further connected with a connection interface 175. The connection interface 175 is connected with the connection interface 65 of the POS terminal 11 to send data to or receive data from the POS terminal 11. The connection interface 175 is also connected with the connection interface 176 of the display and operation section 104 to send data to or receive data from the display and operation section 104.

Next, the functional structure of the CPU 61 realized through the execution of a program (the commodity sales data processing program PR1) by the CPU 61 is described. Fig. 4 is a block diagram illustrating the functional structure of the POS terminal 11.

As shown in Fig. 4, by executing the programs stored in the ROM 62 or the HDD 64, the CPU 61 of the POS terminal 11 exerts various functions. Specifically, the CPU 61 of the POS terminal 11 functions as an image acquisition section 611, a parallel control section 612, an object recognition engine 620, a code symbol recognition engine 630, an input reception section 613, a sales registration section 614 and a display control section 615. Herein, the object recognition engine 620 serving as a first recognition module comprises a commodity detection section 621, a similarity degree calculation section 622 and a similarity degree determination section 623. Further, the code symbol recognition engine 630 serving as a second recognition module comprises a code symbol detection section 631 and a code symbol reading section 632.

The image acquisition section 611 serving as an image capturing module outputs an image capturing control signal to the image capturing section 164 to activate the image capturing section 164 to start an image capturing operation. The image acquisition section 611 acquires the frame images that are captured by the image capturing section 164 and stored in the RAM 163 after the image capturing section 164 starts the image capturing operation in the sequence of the storage of the frame images in the RAM 163.

Further, if there is no commodity in the vicinity of the light source of the image capturing section 164, that is, in the vicinity of the reading window 103, the image capturing section 164 captures the frame images with a brightness of 0 or nearly 0. Moreover, if the commodity (object) the operator desires to recognize approaches the reading window 103, then the light from the light source is reflected towards the commodity (object), and the brightness of the frame image of the commodity (object) is consequentially increased.

The image acquisition section 611 detects such a change in brightness (the change in attributes of color) and determines that the commodity (object) is held over the reading window 103 if the brightness is higher than a specific reference value. On the other hand, if the brightness is lower than the specific reference value, the image acquisition section 611 determines that the commodity (object) is not held over the reading window 103, that is, the commodity (object) is in a frame out state.

The parallel control section 612 controls the processing executed based on the object recognition engine 620 and the code symbol recognition engine 630 in parallel. More specifically, the parallel control section 612 notifies that the image acquisition section 611 acquires the frame images into the RAM 163. In this way, the object recognition engine 620 and the code symbol recognition engine 630 start processing in parallel.

### (Object recognition engine)

The object recognition engine 620 compares a feature amount of a commodity photographed by the image capturing section 164 with a feature amount for collation of each commodity that is stored in the dictionary of the PLU file F1 in advance to obtain a similarity degree therebetween. Moreover, the object recognition engine 620 recognizes, from the commodities stored in the dictionary, a commodity corresponding to the commodity photographed by the image capturing section 164 according to the similarity degree resulting from the comparison. The functions of the object recognition engine 620 are described below in detail.

If the storage of the frame image in the RAM 163 is notified from the parallel control section 612, then the commodity detection section 621 reads the frame image stored in the RAM 163. Moreover, the commodity detection section 621 detects the whole or a part of the commodity contained in the frame image acquired by the image acquisition section 611 using a pattern matching technology. Specifically, the commodity detection section 621 extracts a contour line from an image obtained by executing a binarization processing on the acquired frame image. The commodity detection section 621 detects the commodity facing the reading window 103 according to the difference obtained from the comparison of the contour line extracted from the former frame image with that extracted from the current frame image. The former frame image refers to a frame image of a background acquired by the image acquisition section 611 before the object recognition engine 620 is activated

As another method for commodity detection, the commodity detection section 621 detects whether or not there is a flesh-colored area from the acquired frame image. If the flesh-colored area is detected, that is, the hand of the shop clerk is detected, the commodity detection section 621 detects the foregoing contour line in the vicinity of the flesh-colored area. In this way, the commodity detection section 621 detects the contour line of the commodity assumed to be held by the hand of the shop clerk. In this case, if a contour indicating the shape of the hand and that of an object other than the hand in the vicinity of the contour of the hand are detected, the commodity detection section 621 detects the commodity according to the contour of the object.

The similarity degree calculation section 622 extracts, from all or a part of the frame images of the commodity photographed by the image capturing section 164, a surface state such as the tint or the surface concave-convex state of the commodity as a feature amount. Further, it is assumed that the similarity degree calculation section 622 takes no consideration of the contour or size of the commodity in order to shorten processing time.

Further, the similarity degree calculation section 622 compares the feature amount of each of the commodities (hereinafter referred to as a registered commodity) stored in the PLU file F1 with that of the commodity contained in the frame image to calculate a similarity degree between the registered commodity and the photographed commodity. Herein, the similarity degree represents how much similar all of or a part of the feature amount of the commodity contained in the frame image are to that of the registered commodity stored in the PLU file F1 if the similarity degree of the registered commodity stored in the PLU file is set to 100%="similarity degree: 1.0"F1. Further, the similarity degree calculation section 622 varies a weighting of tint and that of surface concave-convex state to calculate the similarity degree.

The recognition of an object contained in an image is referred to as a general object recognition, which is realized by using the technologies that are illustrated in the following document:
YANAI Keiji, 'The current state and further directions on Generic Object Recognition', in Proceedings of Information Processing Society of Japan, Vol. 48, No SIG 16, In URL:http://mm.cs.uec.ac.jp/IPSJ-TCVIM-Yanai.pdf [retrieved on Aug. 10, 2010]..

In addition, the technology for recognizing an ordinary object through targeted regional image segmentation is described in the following document:
Jamie Shotton: "Semantic Texton Forests for Image Categorization and Segmentation, In URL:http://citeseerx.ist.psu.edu/viewdoc/download?doi=10.1.1.145.3036&rep=re pl&type=pdf (retrieved on Aug. 10, 2010)..

Further, no specific limitations are given to the method of calculating the similarity degree between a feature amount of a commodity extracted from a frame image obtained by photographing the commodity and that of a registered commodity stored in the PLU file F1. For example, the similarity degree may be calculated as an absolute evaluation or a relative evaluation.

First, the calculation of the similarity degree as an absolute evaluation is described. The similarity degree calculation section 622 compares a feature amount of a commodity extracted from a frame image with feature amounts of all registered commodities one by one stored in the PLU file F1. In this way, the similarity degree calculation section 622 calculates a similarity degree as an absolute evaluation.

Next, the calculation of the similarity degree as a relative evaluation is described. The similarity degree calculation section 622 compares a feature amount of a commodity extracted from a frame image with feature amounts of all registered commodities stored in the PLU file F1. In this case, the similarity degree calculation section 622 calculates a similarity degree in such a manner that the sum of the similarity degrees of the photographed commodity and the registered commodities is 1.0 (100%). In this way, the similarity degree calculation section 622 calculates the similarity degree as a relative evaluation.

The similarity degree determination section 623 determines whether or not the similarity degree calculated by the similarity degree calculation section 622 is higher than a specific threshold value. In this way, the similarity degree determination section 623 determines which one of sales registration methods of 'automatic registration', 'commodity candidate presentation' and 'no commodity candidate' should be adopted for the commodity photographed by the image capturing section 164.

If a registered commodity the similarity degree of which is higher than a first threshold value (hereinafter referred to as a determined commodity) is stored in the PLU file F1, the similarity degree determination section 623 determines to sales-register the commodity photographed by the image capturing section 164 through an automatic registration. Herein, the automatic registration refers to the automatic sales registration of the determined commodity even if the sales registration of the commodity is not confirmed by the operator because it is highly probable that the commodity photographed by the image capturing section 164 is the determined commodity.

Further, if the automatic registration possibility information 641 is set to be 'automatic registration permitted', the similarity degree determination section 623 determines that the commodity is sales-registered through the automatic registration. If the automatic registration possibility information 641 is set to be 'automatic registration prohibited', the similarity degree determination section 623 determines that the commodity is sales-registered through a non-automatic registration even if the similarity degree is higher than the first threshold value. In this case, the similarity degree determination section 623 determines to sales-register the commodity photographed by the image capturing section 164 using a sales registration method of a commodity candidate presentation.

If the PLU file F1 contains no determined commodity but a registered commodity the similarity degree of which is smaller than the first threshold value but higher than a second threshold value (hereinafter referred to as a commodity candidate), the similarity degree determination section 623 determines to sales-register the commodity photographed by the image capturing section 164 through commodity candidate presentation. Herein, the commodity candidate presentation refers to the presentation of commodity candidates serving as a candidate of the commodity contained in the frame image captured by the image capturing section 164 so that the commodity is sales-registered through the confirmation operation of the operator. One or more commodity candidates may be presented. Moreover, the similarity degree determination section 623 presents a determined commodity determined through the commodity candidate presentation for the operator as a commodity candidate because the automatic registration possibility information 641 is set to be 'automatic registration prohibited'.

If no registered commodity is stored in the PLU file F1 the similarity degree of which is higher than the second threshold value, the similarity degree determination section 623 determines the absence of the commodity candidate corresponding to the commodity photographed by the image capturing section 164. Herein, the absence of the commodity candidate means that there are only registered commodities each of which the similarity degree calculated by the similarity degree calculation section 622is smaller than the second threshold value, and thus, the commodity photographed by the image capturing section 164 cannot be recognized.

### (Code symbol recognition engine)

The code symbol recognition engine 630 detects a code symbol attached on an object according to a frame image captured by the image capturing section 164. Moreover, the code symbol recognition engine 630 recognizes a commodity corresponding to the object according to the code symbol. The detailed functions of the code symbol recognition engine 630 are described below.

If the storage of a frame image in the RAM 163 is notified from the parallel control section 612, then the code symbol detection section 631 reads the frame image stored in the RAM 163. Moreover, the code symbol detection section 631 detects a code symbol, such as a barcode or a two-dimensional code, which is attached on a commodity as commodity-related information according to a frame image acquired by the image acquisition section 611.

The code symbol reading section 632 reads a commodity ID according to the code symbol detected by the code symbol detection section 631 to recognize the commodity.

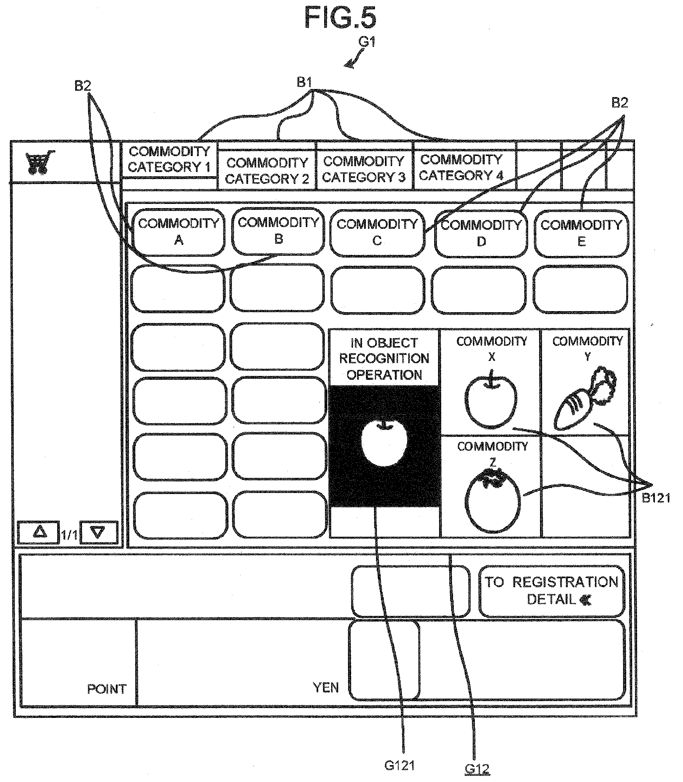

The input reception section 613 receives an operation via an input section such as the keyboard 22 or the touch panel 26. More specifically, the input reception section 613 serving as an input module receives an operation relating to sales registration. For example, the input reception section 613 receives an operation of selecting, from the commodity candidates presented by the similarity degree determination section 623, a commodity to be sales-registered. Alternatively, for example, the input reception section 613 receives an operation of selecting a commodity to be sales-registered using a preset button B2 displayed on a preset screen G1 (refer to Fig. 5). Further, the input reception section 613 may also receive an operation from an input section other than the keyboard 22 or the touch panel 26. For example, the input section may also be the keyboard 107 or the touch panel 105 of the commodity reading apparatus 101.

The sales registration section 614 serving as a registration module records the selected commodity and the information relating to sales registration in a sales master file for sales registration. The sales registration section 614 records, for example, a commodity selected using the preset button B2 (refer to Fig. 5) or according to a code symbol, a determined commodity or a commodity candidate in the sales master file. Specifically, the sales registration section 614 records a commodity corresponding to the preset button B2 in the sales master file. Optionally, the sales registration section 614 records a commodity read according to a code symbol detected by the code symbol recognition engine 630 in the sales master file. Optionally, the sales registration section 614 records a determined commodity recognized by the object recognition engine 620 in the sales master file. Optionally, the sales registration section 614 records a commodity selected by the input reception section 613 from the commodity candidates recognized by the object recognition engine 620 in the sales master file.

The display control section 615 serving as a display control module controls the display of a screen on the first display device 23. For example, the display control section 615 displays the preset screen G1 on the first display device 23 as a first screen. Herein, Fig. 5 is an illustration diagram exemplifying the preset screen G1. The preset screen G1 is a screen on which a preset button B2 is displayed for the operator to press the preset button B2 to sales-register a commodity corresponding to the commodity ID. The preset screen G1 includes an object recognition area G12, a commodity category tab B1 and the preset button B2.

The object recognition area G12 is an area for the sales registration of a commodity recognized by the object recognition engine 620. The object recognition area G12 includes a frame image display region G121 and a commodity candidate button B121. The frame image display region G121 is a region in which a frame image captured by the image capturing section 164 is displayed. The commodity candidate button B121 is a button corresponding to the commodity ID of a commodity candidate determined by the similarity degree determination section 623 according to a similarity degree. If the commodity candidate button B121 serving as the first input section is pressed, then the sales registration section 614 sale-registers a commodity the commodity ID of which corresponds to the commodity candidate button B121. The commodity category tab B1 is the tab of each commodity category. If the commodity category tab B1 is pressed, then the display control section 615 displays a preset button B2 for the commodity category corresponding to the category tab B1. The preset button B2 is a button corresponding to the commodity ID of a preset commodity. If the preset button B2 serving as a second input section is pressed, then the sales registration section 614 sale-registers the commodity the commodity ID of which corresponds to the preset button B2.

Further, the display control section 615 keeps the object recognition area G12 displayed even if a preset button B2 for another commodity category is displayed when the commodity category tab B1 is pressed. That is, the display control section 615 switches the display to the display of a preset button B2 for another commodity category along with the display of the commodity candidate button B121. In this case, it is preferred that the display control section 615 displays the object recognition area G12 at the same position so that the operator can observe the object recognition area G12 easily. Further, the display control section 615 may change the position where the object recognition area G12 is displayed while switching the display screen through the commodity category tab B1.

Further, the frame image display region G121 shown in Fig. 5 is displayed at the lower right part of the preset screen G1. However, the display control section 615 may move the display position of the frame image display region G121. Further, three commodity candidates are displayed in the frame image display region G121 shown in Fig. 5. However, the display control section 615 may display less than three or more than four commodity candidates.

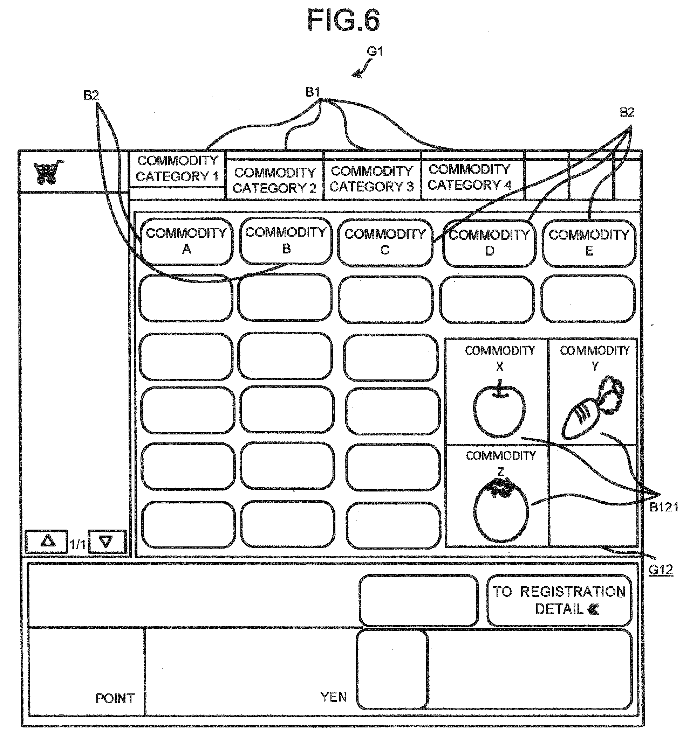

Further, the preset screen G1 may not include the frame image display region G121 of the object recognition area G12. Herein, Fig. 6 is an illustration diagram exemplifying the preset screen G1 not including the frame image display region G121. The display control section 615 not having the frame image display region G121 can display more preset buttons B2.

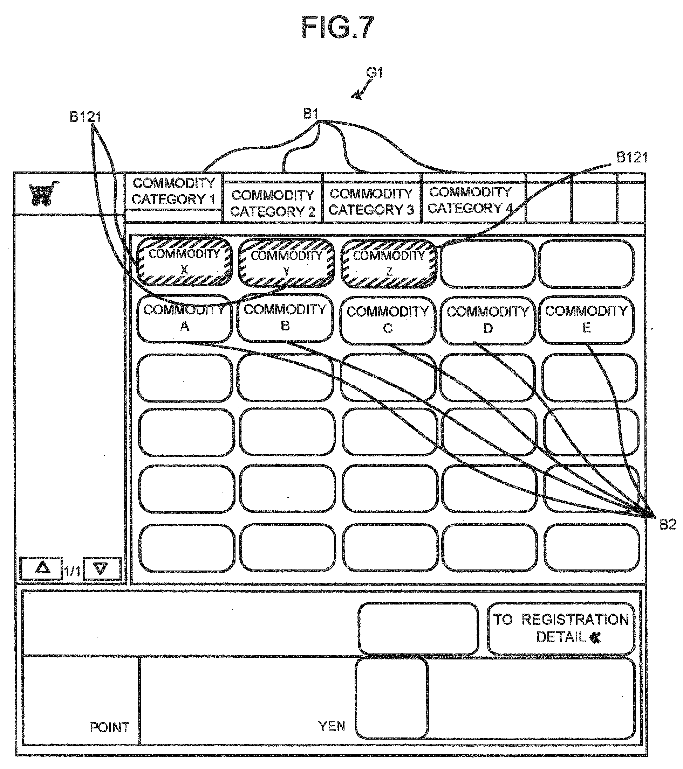

Further, the preset screen G1 may further display the commodity candidate button B121 in the same form with the preset button B2. Herein, Fig. 7 is an illustration diagram exemplifying the preset screen G1 on which the commodity candidate button B121 is displayed in the same form with the preset button B2. The commodity candidate button B121 shown in Fig. 7 is a button having an identical form to the preset button B2 in a form capable of making the commodity candidate button B121 as representation of a commodity candidate. The form capable of making the commodity candidate button B121 as representation of a commodity candidate may be, for example, a change in the color, the addition of a mark or a character string or the performance of an animation processing.

Sequentially, an image capturing processing is described which is carried out by the CPU 61 of the POS terminal 11 of the foregoing embodiment according to a control program. The image capturing processing refers to the output of a frame image captured by the image capturing section 164 of the commodity reading section 110 to the object recognition engine 620 and the code symbol recognition engine 630. In this way, the object recognition engine 620 and the code symbol recognition engine 630 process the frame image in parallel.

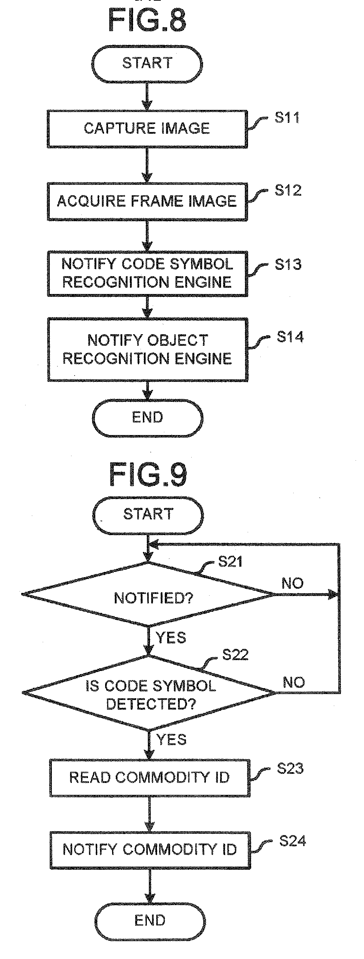

Fig. 8 is a flowchart illustrating the flow of an image capturing processing carried out by the CPU 61 of the POS terminal 11 according to a control program.

The CPU 61 (the image acquisition section 611) of the POS terminal 11 outputs an image capturing control signal to the image capturing section 164 to activate the image capturing section 164 to start an image capturing operation (Act S11). Then, the CPU 61 (the image acquisition section 611) of the POS terminal 11 sequentially acquires the frame images of the commodity that are captured by the image capturing section 164 and stored in the RAM 163 (Act S12).

Next, the CPU 61 (the parallel control section 612) of the POS terminal 11 notifies the code symbol recognition engine 630 of the transfer of the frame images into the RAM 163 (Act S13).

Sequentially, the CPU 61 (the parallel control section 612) of the POS terminal 11 notifies the object recognition engine 620 of the transfer of the frame images into the RAM 163 (Act S14).

Then, the CPU 61 of the POS terminal 11 ends the image capturing processing. Further, no limitations are given to the sequence of the notifications of the transfer of the frame images into the RAM 163 to the object recognition engine 620 and the code symbol recognition engine 630. That is, the CPU 61 (the parallel control section 612) of the POS terminal 11 may notify the object recognition engine 620 before notifying the code symbol recognition engine 630. Alternatively, the CPU 61 (the parallel control section 612) of the POS terminal 11 may notify the object recognition engine 620 and the code symbol recognition engine 630 synchronously.

Next, a commodity recognition processing based on the code symbol recognition engine 630 is described which is carried out by the CPU 61 of the POS terminal 11 of the foregoing embodiment according to a control program. The commodity recognition processing based on the code symbol recognition engine 630 refers to the recognition of a commodity by the code symbol recognition engine 630 according to a code symbol contained in a frame image.

Fig. 9 is a flowchart illustrating the flow of a commodity recognition processing based on the code symbol recognition engine 630 carried out by the CPU 61 of the POS terminal 11 according to a control program.

The CPU 61 (the code symbol detection section 631) of the POS terminal 11 determines whether or not the storage of a frame image in the RAM 163 is notified from the parallel control section 612 (Act S21). If it is determined that the storage of a frame image in the RAM 163 is not notified from the parallel control section 612 (Act S21: No), the CPU 61 (the code symbol detection section 631) of the POS terminal 11 enters a standby state to wait to carry out a commodity recognition processing based on the code symbol recognition engine 630.

On the other hand, if it is determined that the storage of a frame image in the RAM 163 is notified from the parallel control section 612 (Act S21: Yes), the CPU 61 (the code symbol detection section 631) of the POS terminal 11 determines whether or not a code symbol is detected from the frame image stored in the RAM 163 (Act S22).

If it is determined that no code symbol is detected (Act S22: No), the CPU 61 (the code symbol detection section 631) of the POS terminal 11 returns to execute Act S21.

On the other hand, if it is determined that a code symbol is detected (Act S22: Yes), the CPU 61 (the code symbol reading section 632) of the POS terminal 11 reads a commodity code from the detected code symbol (Act S23).

Sequentially, the CPU 61 (the code symbol reading section 632) of the POS terminal 11 notifies the sales registration section 614 of the commodity ID read from the code symbol (Act S24).

Then, the CPU 61 of the POS terminal 11 ends the commodity recognition processing based on the code symbol recognition engine 630.

Next, a commodity recognition processing based on the object recognition engine 620 is described which is carried out by the CPU 61 of the POS terminal 11 of the foregoing embodiment according to a control program. The commodity recognition processing based on the object recognition engine 620 refers to a process that the object recognition engine 620 extracts a feature amount of a commodity contained in a frame image and calculates a similarity degree to recognize the commodity.

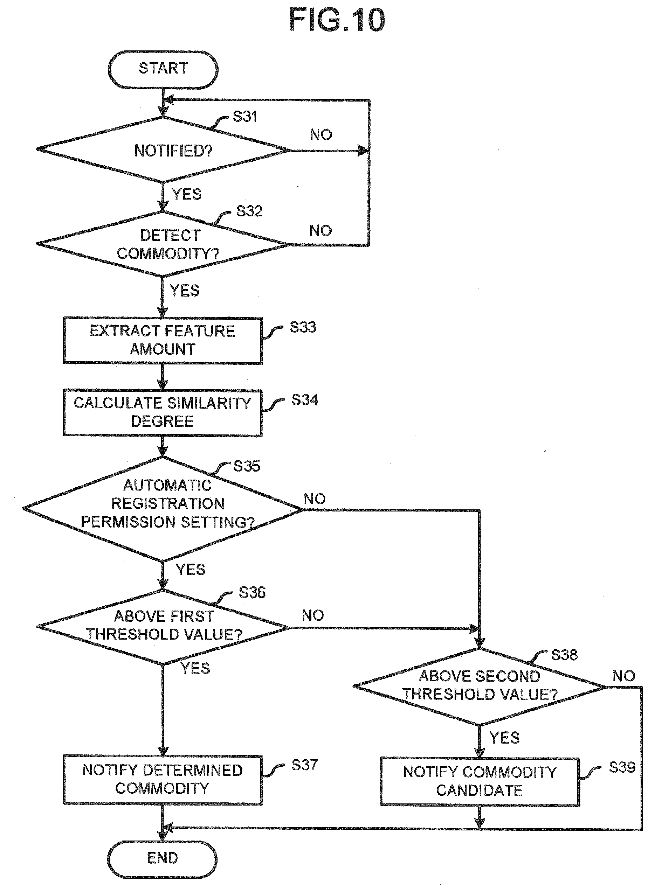

Fig. 10 is a flowchart illustrating the flow of a commodity recognition processing based on the object recognition engine 620 carried out by the CPU 61 of the POS terminal 11 according to a control program.

The CPU 61 (the commodity detection section 621) of the POS terminal 11 determines whether or not the storage of a frame image in the RAM 163 is notified from the parallel control section 612 (Act S31). If it is determined that the storage of a frame image in the RAM 163 is not notified (Act S31: No), the CPU 61 (the commodity detection section 621) of the POS terminal 11 enters a standby state to wait to carry out a commodity recognition processing based on the object recognition engine 620.

On the other hand, if it is determined that the storage of a frame image in the RAM 163 is notified (Act S31: Yes), the CPU 61 (the commodity detection section 621) of the POS terminal 11 determines whether or not a commodity is detected from the frame image stored in the RAM 163 (Act S32). If it is determined that no commodity is detected (Act S32: No), the CPU 61 (the commodity detection section 621) of the POS terminal 11 returns to execute Act S31.

On the other hand, if it is determined that a commodity is detected (Act S32: Yes), the CPU 61 (the similarity degree calculation section 622) of the POS terminal 11 extracts a feature amount of the commodity contained in the frame image (Act S33).

Then, the CPU 61 (the similarity degree calculation section 622) of the POS terminal 11 calculates the similarity degree of the commodity contained in the frame image (Act S34).

Sequentially, the CPU 61 (the similarity degree determination section 623) of the POS terminal 11 determines whether or not the automatic registration possibility information 641 stored in the HDD 64 is set to be 'automatic registration permitted' (Act S35). If the automatic registration possibility information 641 is set as 'automatic registration prohibited' (Act S35: No), the CPU 61 (the similarity degree determination section 623) of the POS terminal 11 moves to Act S38.

If the automatic registration possibility information 641 is set as 'automatic registration permitted' (Act S35: Yes), the CPU 61 (the similarity degree determination section 623) of the POS terminal 11 determines whether or not a registered commodity the similarity degree of which is higher than a first threshold value is contained in the PLU file F1 (Act S36).

If the registered commodity the similarity degree of which is higher than the first threshold value is contained in the PLU file F1 (Act S36: Yes), the CPU 61 (the similarity degree determination section 623) of the POS terminal 11 notifies the sales registration section 614 of the commodity ID of the determined commodity (Act S37).

On the other hand, if it is determined that the registered commodity the similarity degree of which is higher than the first threshold value is not contained in the PLU file F1 (Act S36: No), the CPU 61 (the similarity degree determination section 623) of the POS terminal 11 determines whether or not a registered commodity the similarity degree of which is higher than a second threshold value is contained in the PLU file F1 (Act S38).

If it is determined that the registered commodity the similarity degree of which is higher than the second threshold value is contained in the PLU file F1 (Act S38: Yes), the CPU 61 (the similarity degree determination section 623) of the POS terminal 11 notifies the display control section 615 of the commodity ID of the commodity candidate (Act S39). Thus, when the preset screen G1 is displayed, the CPU 61 (the display control section 615) of the POS terminal 11 can display a commodity candidate button B121.

On the other hand, if it is determined according to the calculated similarity degree that no commodity can be listed as a commodity candidate (Act S38: No), the CPU 61 (the similarity degree determination section 623) of the POS terminal 11 carries out no special processing.

Thus, the CPU 61 of the POS terminal 11 ends the commodity recognition processing based on the object recognition engine 620.

Next, a sales registration processing is described which is carried out by the CPU 61 of the POS terminal 11 of the foregoing embodiment according to a control program. The sales registration processing refers to a processing of sales-registering a sold commodity.

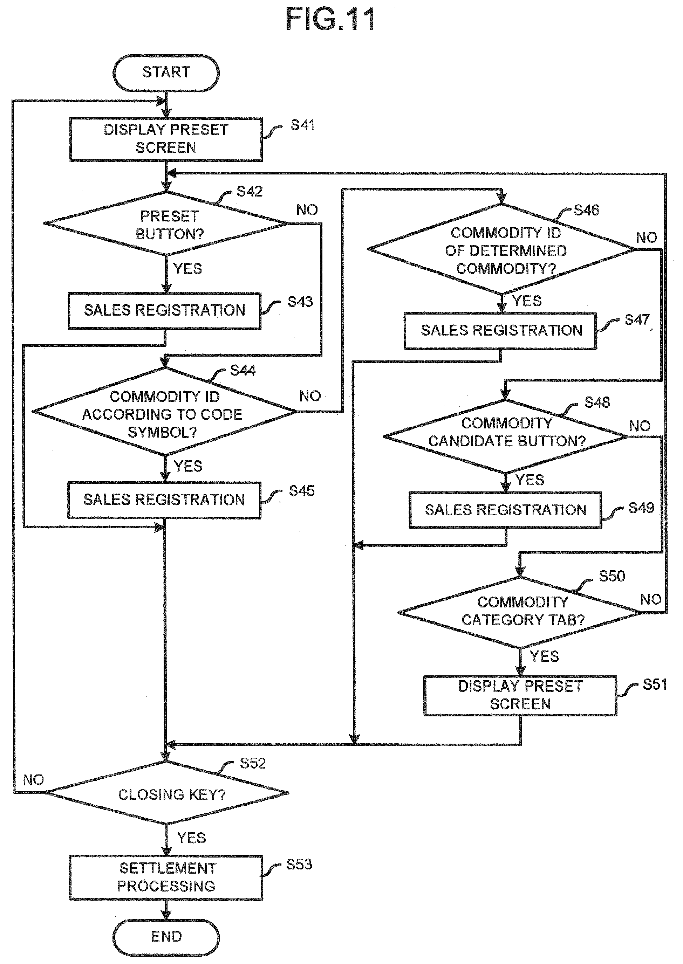

Fig. 11 is a flowchart illustrating the flow of a sales registration processing carried out by the CPU 61 of the POS terminal 11 according to a control program.

The CPU 61 (the display control section 615) of the POS terminal 11 displays the preset screen G1 (Act S41).

Then, the CPU 61 (the input reception section 613) of the POS terminal 11 determines whether or not a preset button B2 displayed on the preset screen G1 is pressed (Act S42). If it is determined that a preset button B2 displayed on the preset screen G1 is pressed (Act S42: Yes), the CPU 61 (the sales registration section 614) of the POS terminal 11 sales-registers the commodity the commodity ID of which corresponds to the preset button B2 (Act S43).

On the other hand, if it is determined that no preset button B2 displayed on the preset screen G1 is pressed (Act S42: No), the CPU 61 (the input reception section 613) of the POS terminal 11 determines whether or not a commodity ID read according to a code symbol is notified (Act S44).

If it is determined that the commodity ID read according to the code symbol is notified (Act S44: Yes), the CPU 61 (the sales registration section 614) of the POS terminal 11 sales-registers the commodity corresponding to the notified commodity ID (Act S45).

On the other hand, if it is determined that the commodity ID read according to the code symbol is not notified (Act S44: No), the CPU 61 (the input reception section 613) of the POS terminal 11 determines whether or not the commodity ID of a determined commodity is notified (Act S46).

If it is determined that the commodity ID of a determined commodity is notified (Act S46: Yes), the CPU 61 (the sales registration section 614) of the POS terminal 11 sale-registers the commodity corresponding to the commodity ID of the determined commodity (Act S47).

On the other hand, if it is determined that the commodity ID of the determined commodity is not notified (Act S46: No), the CPU 61 (the input reception section 613) of the POS terminal 11 determines whether or not a commodity candidate button B121 is pressed (Act S48).

If it is determined that a commodity candidate button B121 is pressed (Act S48: Yes), the CPU 61 (the sales registration section 614) of the POS terminal 11 sale-registers the commodity the commodity ID of which corresponds to the commodity candidate button B121 (Act S49).

On the other hand, if it is determined that no commodity candidate button B121 is pressed (Act S48: No), the CPU 61 (the input reception section 613) of the POS terminal 11 determines whether or not a commodity category tab B1 is pressed (Act S50).

If it is determined that no commodity category tab B1 is pressed (Act S50: No), the CPU 61 (the input reception section 613) of the POS terminal 11 returns to execute Act S42.

On the other hand, if it is determined that a commodity category tab B1 is pressed (Act S50: Yes), the CPU 61 (the display control section 615) of the POS terminal 11 displays the preset screen G1 of a commodity category corresponding to the commodity category tab B1 (Act S51). At this time, the CPU 61 (the display control section 615) of the POS terminal 11 maintains the display of the object recognition area G12.

Sequentially, the CPU 61 of the POS terminal 11 determines whether or not the closing key 22f is pressed (Act S52). If it is determined that the closing key 22f is not pressed (Act S52: No), the CPU 61 of the POS terminal 11 returns to execute Act S41.

On the other hand, if it is determined that the closing key 22f is pressed (Act S52: Yes), the CPU 61 of the POS terminal 11 carries out a settlement processing for the commodity subjected to a sales registration processing (Act S53).

Then, the CPU 61 of the POS terminal 11 ends the sales registration processing.

As stated above, according to the POS terminal of the present embodiment, the display control section 615 displays the commodity candidates recognized by the object recognition engine 620 on the preset screen G1. Through the preset screen G1, a sales registration processing can be carried out with the use of a preset button B2 which corresponds to a commodity in advance. Moreover, the sales registration section 614 sale-registers a commodity selected based on a commodity candidate or a preset button B2. In this way, the POS terminal 11 according to the present embodiment can be simply operated to carry out sales registration based on a general object recognition without switching screens.

While certain embodiments have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the framework of the invention. The accompanying claims and their equivalents are intended to cover such forms or modifications as would fall within the scope of the invention.

For example, it is described in the foregoing embodiments that a PLU file F1 is arranged in the POS terminal 11; however, the present invention is not limited to this, and the PLU file F1 may also be arranged in the commodity reading apparatus 101. Alternatively, it is also applicable that the POS terminal 11 and the commodity reading apparatus 101 are capable of accessing a PLU file F1 arranged in an external apparatus.

Further, in the foregoing embodiments, the POS terminal 11 is applicable as an information processing apparatus equipped with functions of an image acquisition section 611, a parallel control section 612, an object recognition engine 620, a code symbol recognition engine 630, an input reception section 613, a sales registration section 614 and a display control section 615. However, the present invention is not limited to this; the information processing apparatus equipped with the foregoing functions may also be the commodity reading apparatus 101 which outputs a calculation result or a determination result to the POS terminal 11. Further, data for collation, although described as a feature amount in the foregoing embodiments, may also be a captured commodity image (reference image).

Further, in the foregoing embodiments, the checkout system 1 consisting of the POS terminal 11 and the commodity reading apparatus 101 functions as a store system. However, not limited to this, the store system may also be a single apparatus possessing the functions of the POS terminal 11 and the commodity reading apparatus 101. The single apparatus possessing the functions of the POS terminal 11 and the commodity reading apparatus 101 may be, for example, a self-checkout apparatus (hereinafter referred to as a self-checkout POS terminal) used in a store such as a supermarket.

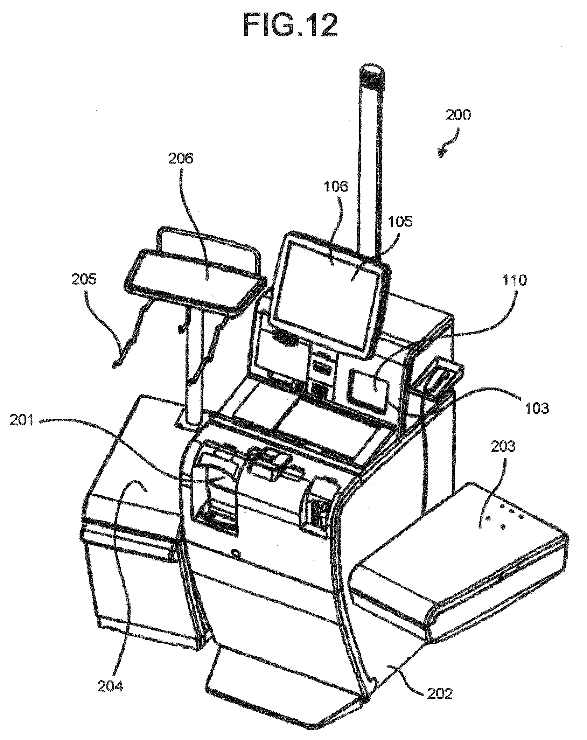

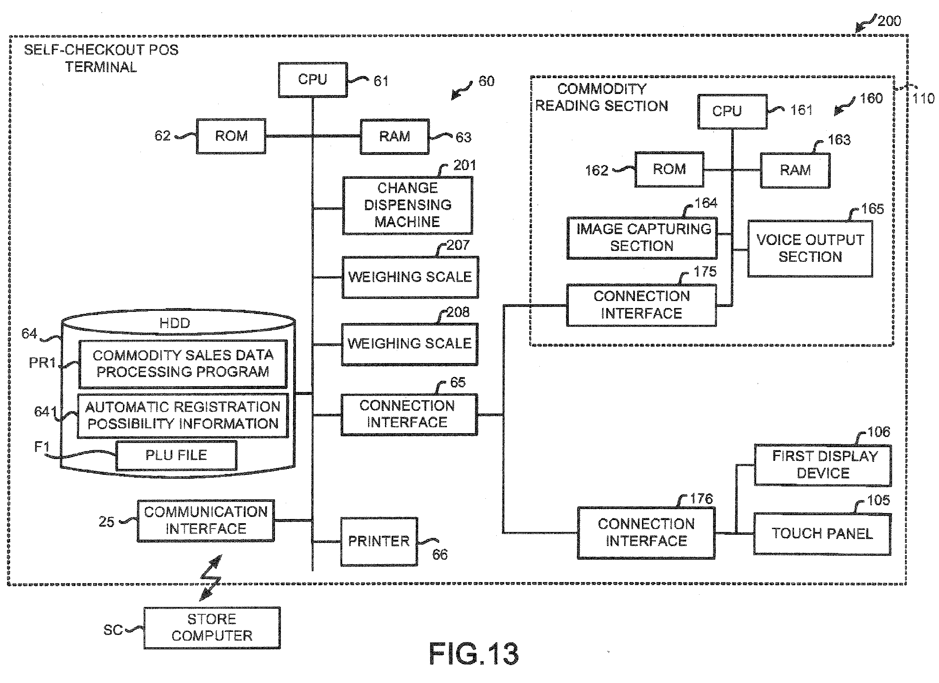

Herein, Fig. 12 is an external perspective view illustrating the structure of a self-checkout POS terminal 200. Fig. 13 is a block diagram illustrating the hardware structure of the self-checkout POS terminal 200. Moreover, the components shown in Fig. 12 and Fig. 13 which are identical to those shown in Fig. 1 and Fig. 2 are hereinafter denoted by the same reference signs and not described repeatedly. As shown in Fig. 12 and Fig. 13, a main body 202 of a self-checkout POS terminal 200 is provided with a first display device 106 having a touch panel 105 on the surface thereof and a commodity reading section 110 which reads the image of a commodity so as to recognize (detect) the category of the commodity.

The first display device 106 is, for example, a liquid crystal display. The first display device 106 displays, for example, a guide screen, an input screen, a sales registration screen and a settlement screen. The guide screen is a screen for notifying the customer of how to operate the self-checkout POS terminal 200. The input screen is a screen for inputting various kinds of information. The sales registration screen is a screen for displaying the commodity information read by the commodity reading section 110. The settlement screen is a screen on which the total amount of purchased commodities, a deposit amount, a change amount and a selected payment method are displayed.

The commodity reading section 110 is a component which reads a commodity image using the image capturing section 164 as the customer holds a code symbol attached on a commodity over the reading window 103 of the commodity reading section 110.

Further, a commodity placing table 203 for placing an unsettled commodity taken out from the shopping basket 153 is arranged at the right side of the main body 202. A commodity placing table 204 for placing a settled commodity is arranged at the left side of the main body 202. A bag hook 205 for hooking a bag in which settled commodities are placed and a temporary placing table 206 for temporarily placing a settled but not bagged commodity are arranged on the commodity placing table 204. Weighing devices 207 and 208 are arranged on the commodity placing tables 203 and 204 to confirm whether or not the weight of a commodity is changed after the commodity is settled.

Further, a change dispensing machine 201 for inputting paper money for commodity settlement and outputting paper money as change is arranged on the main body 202 of the self-checkout POS terminal 200.

When applied to a store system, the self-checkout POS terminal 200 with such a structure functions as an information processing apparatus.

The programs executed by each apparatus of the foregoing embodiments or variations of the foregoing embodiments are pre-compiled in a storage medium (e.g. the ROM or the storage section) of each apparatus; however, the present invention is not limited to this. The programs may be recorded in a computer-readable recording medium such as a CD-ROM, a FD (Flexible Disk), a CD-R and a DVD (Digital Versatile Disk) in the form of installable or executable file. Further, the storage medium, which is not limited to a medium independent from a computer or an assembled system, may be a storage medium for storing or temporarily storing the downloaded program transferred via an LAN or the Internet.

Further, the programs executed by each apparatus of the foregoing embodiments or variations of the foregoing embodiments are stored in a computer connected with a network such as the Internet and downloaded via the network, or are provided or distributed by the network such as the Internet.

## Claims

1. An information processing apparatus, comprising:
an image capturing module configured to photograph an object held over an image capturing section;
a first recognition module configured to compare a feature amount of the object obtained from the image captured by the image capturing module with a feature amount for collation of each of commodities that is pre-stored in a dictionary to obtain a similarity degree therebetween and recognize, from different commodities, a commodity matching with the object according to the similarity degree;
a display control module configured to display, on a first screen, a first input section that corresponds to the commodity recognized by the first recognition module and a second input section which corresponds to commodities in advance;
an input module configured to receive the selection on the first or second input section displayed by the display control module; and
a registration module configured to sales-register the commodity corresponding to the first or second input section received by the input module.

2. The information processing apparatus according to claim 1, further comprising:
a second recognition module configured to detect a code symbol attached to the object from the image of the object captured by the image capturing module and recognize a commodity corresponding to the object according to the code symbol, wherein
the registration module sale-registers the commodity recognized by the second recognition module.

3. The information processing apparatus according to claim 1 or 2, wherein
the display control module still displays the first input section even if the displayed first screen is switched according to each commodity category of the commodities corresponding to the second input section.

4. The information processing apparatus according to claim 2 or 3, wherein
the display control module still displays the first input section even if the displayed first screen is switched according to each commodity category of the commodities corresponding to the second input section.

5. The information processing apparatus according to any one of claims 1 to 4, wherein
in the case where it is set that a commodity the similarity degree of which is above a threshold value is sales-registered even if there is no input from the input module, the registration module sales-registers the commodity which is recognized by the first recognition module to have the similarity degree higher than the threshold value.

6. A store system, comprising the information processing apparatus according to any one of claims 1 to 5.

7. A method for processing information using an information processing apparatus, including:
capturing image by photographing an object;
a first recognition step comprising comparing a feature amount of the object photographed at the capturing step with a feature amount for collation of each of commodities that is pre-stored in a dictionary to obtain a similarity degree therebetween and recognizing, from different commodities, a commodity matching with the object according to the similarity degree;
displaying, on a first screen, a first input section that corresponds to the commodity recognized at the first recognition step and a second input section which corresponds to commodities in advance;
an inputting step comprising receiving the selection on the first or second input section displayed at the displaying step; and
sales-registering the commodity corresponding to the first or second input section received at the input step.

8. The method according to claim 7, further comprising:
a second recognition step to detect a code symbol attached to the object from the image of the object captured by the image capturing module and recognize a commodity corresponding to the object according to the code symbol, wherein
the commodity recognized at the second recognition step is sale-registered.

9. The method according to claim 7 or 8, wherein
the first input section is still displayed even if the displayed first screen is switched according to each commodity category of the commodities corresponding to the second input section.

10. The method according to any one of claims 6 to 9, wherein
in the case where it is set that a commodity the similarity degree of which is above a threshold value is sales-registered even if there is no input from at the inputting step, the commodity which is recognized to have the similarity degree higher than the threshold value at the first recognition step is sales-registered.

11. A computer-readable storage medium having stored thereon a program which is executable by a computer, the program controlling the computer to execute functions of the information processing apparatus according to any one of claims 1 to 5.
